# FASCICULE DE BREVET EUROPEEN

(11) **EP 3 600 862 B1**
(45) Date de publication et mention de la délivrance du brevet: **09.02.2022**
(21) Numéro de dépôt: 18722658.4
(22) Date de dépôt: 29.03.2018
(51) Int. Cl.: B29D 30/06, B29C 33/50

(54) **MEMBRANE ET PROCÉDÉ DE CUISSON DE PNEUMATIQUE**
REIFENAUSHÄRTUNGSMEMBRAN UND VORGANG
TYRE CURING MEMBRANE AND PROCESS

(30) Priorité: 30.03.2017 FR 1752722
(43) Date de publication de la demande: 05.02.2020
(73) Titulaire: Compagnie Générale des Etablissements Michelin, 63000 Clermont-Ferrand (FR)
(72) Inventeur: PIALOT, Frédéric, 63040 Clermont-Ferrand Cedex 9 (FR); FOMBELLE, Damien, 63040 Clermont-Ferrand Cedex 9 (FR); SIMONELLI, Thomas, 63040 Clermont-Ferrand Cedex 9 (FR)
(74) Mandataire: Redouté, Gilles Pierre
(86) Numéro de dépôt international: PCT/FR2018/050785
(87) Numéro de publication internationale: WO 2018/178586

(56) Documents cités:
- EP-A1- 2 431 163
- EP-A2- 0 715 947
- DE-A1- 1 934 465
- FR-A1- 2 966 075

## Description

La présente invention se rapporte au domaine des pneumatiques et concerne les membranes de cuisson utilisées dans les procédés de fabrication des pneumatiques.

Les pneumatiques sont habituellement obtenus par moulage et vulcanisation d'une enveloppe crue à l'intérieur d'un moule installé dans une presse de cuisson. Les parois externes de l'enveloppe sont plaquées contre les parois internes métalliques du moule de cuisson au moyen d'une membrane de cuisson qui est, elle, expansible sous l'effet d'un fluide caloporteur sous pression. Le dessin de la bande de roulement des garnitures du moule et celui des coquilles s'imprime alors sur l'enveloppe crue qui est ensuite vulcanisée à l'aide de la chaleur.

La membrane de cuisson se déploie à l'intérieur de l'enveloppe crue, avant la cuisson, et elle se replie, à la fin, à l'intérieur du moule. La membrane de cuisson comporte à cette fin un corps flexible réalisé par vulcanisation en un caoutchouc de type butyle. La surface extérieure de la membrane présente des stries d'évacuation d'air et une certaine texture pour améliorer l'aspect visuel de l'intérieur du pneu. Lors de la cuisson d'un pneumatique, le corps de la membrane est très sollicité en traction/compression, sous l'action du fluide à l'intérieur de la membrane, mais aussi en frottement au contact du pneumatique. De plus, la membrane travaille à des températures élevées. Par ailleurs, on exige d'une membrane de cuisson de résister aux sollicitations mécaniques et thermiques pendant un certain nombre de cycles de cuisson, qui est habituellement de quelques centaines. Compte tenu de toutes ces contraintes, les parois de la membrane doivent présenter une certaine épaisseur qui est, dans sa partie centrale la plus fine, pour un pneu de tourisme par exemple, comprise entre 4 et 6mm.

Or, il a été constaté qu'une telle membrane épaisse en caoutchouc, qui est donc isolante thermiquement, forme écran pour l'énergie thermique qui doit la traverser lors de la cuisson avant d'atteindre le pneu.

Le document CN 201220641037 apporte une solution à ce problème en proposant une membrane de cuisson de faible épaisseur. La membrane selon ce document présente un corps flexible dont la paroi a une épaisseur de 3mm sauf au niveau des talons où l'épaisseur est de 3,5mm. Présentant certes une meilleure conductivité thermique que les membranes de cuisson habituelles, la durée de cuisson sous pression du pneu n'est toutefois pas réduite de manière notable.

Pour que la membrane puisse s'adapter à la géométrie des différents pneumatiques et aux dimensions des plateaux de support de membrane au sein des presses de cuisson, elle doit être dimensionnée en conséquence. De ce fait, on rencontre une grande diversité de membranes de cuisson dans l'industrie, ce qui demande une grande capacité de stockage et une logistique appropriée au sein de l'atelier de cuisson. Par ailleurs, les membranes doivent être traitées pour qu'elles s'assouplissent avant une première utilisation, ce qui nécessite un temps de préparation supplémentaire de celles-ci. De surcroît, pour éviter que la membrane colle au pneu, ce dernier doit être traité par enduction avec un produit anti-collant avant de l'introduire dans le moule de cuisson. Cela implique des manipulations supplémentaires du bandage de pneumatique avant la cuisson qui sont couteuses et prennent du temps.

Pour pallier à ces problèmes, le document EP 1024946 propose un moule de cuisson pour pneumatiques qui est exempt de membrane de cuisson. Le moule selon ce document comprend des anneaux d'étanchéité qui viennent au contact des talons du pneumatique lors de la cuisson pour assurer l'étanchéité du fluide caloporteur sous pression à l'intérieur du pneumatique. Tout en présentant, certes, une durée de cuisson sous pression optimisée, il s'est toutefois avéré qu'une cuisson sans membrane pose de problèmes de moulage qui sont dus principalement à la pénétration du fluide caloporteur sous pression dans les couches de gomme. D'autres problèmes de moulage ont également été constatés, et sont apparu notamment au niveau des soudures des nappes, des bourrelets. Il a également été observé l'apparition du fluage des gommes des différentes nappes au travers des fils de la nappe carcasse. D'autres technologies de l'art antérieur sont connues des documents FR 2 966 075, EP 2 431 163, EP 0 715 947 et DE 19 34 465.

Un objectif de l'invention est de remédier aux inconvénients des documents précités et d'apporter une solution originale pour permettre de réduire la durée de la cuisson sous pression d'un pneumatique tout en permettant d'obtenir un pneumatique d'une excellente qualité.

Ce but est atteint par l'invention qui propose une membrane de cuisson pour pneumatique comprenant un corps en une matière souple adapté pour être inséré en position repliée à l'intérieur d'un bandage de pneumatique dans un moule de cuisson et qui est apte à être expansé de manière à plaquer le bandage contre la surface interne du moule, caractérisée en ce que ledit corps est réalisé à base d'un film en un polymère thermoplastique et a une forme de tube cylindrique lorsque la membrane est en position repliée.

Selon l'invention, on remplace la membrane de cuisson épaisse, en butyle, de l'état de la technique par une membrane de cuisson très fine en étant réalisée à partir d'un film en un polymère thermoplastique. Par film en un polymère thermoplastique, on comprend un film flexible résistant à la chaleur de la cuisson est qui est réalisé sous forme d'une mince couche ou pellicule. Le corps de la membrane a une forme de tube cylindrique lorsque la membrane est en position repliée avant la cuisson ou avant l'injection du fluide caloporteur sous pression à l'intérieur du moule. Un tel film est choisi de manière à présenter de bonnes propriétés d'extensibilité lui permettant de se déformer et prendre une forme torique sous la pression du fluide caloporteur introduit à l'intérieur de la membrane lorsque le pneumatique cru est placé dans un moule de cuisson.

Il a ainsi été constaté, lors des tests effectués en laboratoire, que la durée de cuisson sous pression d'un pneumatique de tourisme était réduite d'environ 10%, car l'énergie véhiculée par le fluide caloporteur atteint très rapidement le pneu, l'épaisseur du film étant nettement inférieure à celle d'une membrane usuelle. De surcroît, un tel film polymère résiste à des températures de cuisson supérieures à celles d'une membrane en butyle et, de ce fait, il permet la cuisson à de hautes températures, par exemple de l'ordre de 150° à 180°C.

De préférence, ledit film en un polymère thermoplastique est du type anti-collant.

Ledit film présente de préférence une adhésion limitée au pneumatique, voire à la couche de gomme située le plus à l'intérieur de celui-ci pour pouvoir en être décollé. Par anti-collant, on comprend que la force de pelage du film du pneumatique est de préférence inférieure à 1 N/mm et très préférentiellement inférieure à 0,5 N/mm à 20°C.

Avantageusement, ledit film est choisi dans le groupe des films comportant au moins un polymère fluoré. Les polymères fluorés présentent d'excellentes propriétés anti-collantes.

De préférence, le polymère fluoré est choisi dans le groupe des polymères comportant un copolymère éthylène-propylène fluoré (FEP), un perfluoroalkoxy (PFA), un copolymère éthylène-tétrafluoroéthylène, (ETFE), ou un polytétrafluoroéthylène (PTFE) et leurs mélanges.

Dans un mode de réalisation préféré de l'invention, le corps de la membrane est réalisé dans un film en un polymère thermoplastique qui est fixé sur les plateaux de support de membrane prévus à cet effet dans une presse de cuisson. En réalisant la membrane en un film de polymère fluoré choisi dans le groupe des polymères comportant FEP ou PFA ou ETFE ou PTFE, on arrive à détacher facilement la membrane du pneumatique sans devoir procéder à une étape d'enduction du pneumatique cru avec un produit anti-collant préalablement à la cuisson.

Il a également été constaté que, en utilisant un tel film, le pneumatique était bien moulé en tout point sans que les nappes aient subi de déplacement relatif ou de fluage. Il a été observé, de manière surprenante, que même en utilisant un film lisse (non texturé), donc en absence de sillons d'évacuation d'air sur la membrane, le pneumatique était bien moulé, l'aspect intérieur du pneu étant donc très lisse. Cela est dû à la capacité de glissement du film polymère, l'air occlus arrive à glisser le long de la paroi du film lors du déploiement de la membrane.

De préférence, l'épaisseur dudit film est inférieure à 0,1mm. Et encore plus préférentiellement l'épaisseur dudit film est comprise entre 25 et 50µm.

Un film de cette épaisseur est suffisamment mince pour ne pas être thermiquement inerte tout en ayant une bonne résistance aux sollicitations mécaniques.

Avantageusement, ledit film est extensible dans plusieurs directions et il a une capacité d'allongement d'au moins 300% dans chaque direction.

Par plusieurs directions on comprend au moins la direction d'étirage du film lors de sa fabrication (plan ou tube) et une direction perpendiculaire à celle-ci. Cela permet à la membrane de s'étendre en prenant la forme d'un tore, de se replier ensuite et cela lors de plusieurs cycles de cuisson. De plus, un tel film qui a une grande capacité de déformation permet de s'adapter à différentes dimensions de pneumatique et, de ce fait, de réduire le nombre de références de membranes de cuisson nécessaires en usine.

De préférence, la conductivité thermique dudit film est supérieure à 0,1W/m/K.

Avantageusement, ledit corps a une forme générale tubulaire et ses dimensions sont choisies en fonction de celles du bandage de pneumatique à cuire de manière à ce que le diamètre dudit corps soit inférieur au diamètre interne du bandage de pneumatique et la longueur au moins égale à la distance comprise entre ses tringles.

Une telle membrane peut alors s'adapter, de par la déformation du film tubulaire, à plusieurs dimensions de pneumatiques.

L'objectif de l'invention est également atteint avec un dispositif de vulcanisation d'un pneumatique à l'aide d'un moule de cuisson et d'un fluide caloporteur qui agit à travers une membrane de cuisson pour plaquer le bandage de pneumatique contre la surface interne du moule, dans lequel la membrane est réalisée selon l'invention.

L'invention a également pour objet un procédé de fabrication d'un pneumatique, comportant les étapes suivantes :
- on confectionne un bandage de pneumatique cru par assemblage sur un tambour rotatif d'au moins : une couche interne étanche au gaz, une nappe carcasse, une nappe de renfort et une bande de roulement et par conformation en forme de tore ;
- on place le bandage dans un moule de cuisson ;
- on réalise la cuisson du pneumatique à l'aide d'un fluide caloporteur introduit à l'intérieur du moule de cuisson pour plaquer ledit bandage contre la surface interne du moule en agissant sur la face interne d'une membrane expansible réalisée à base d'un film en un polymère thermoplastique et comportant un corps qui a une forme de tube cylindrique lorsque la membrane est en position repliée, avant la cuisson.

L'invention sera mieux comprise grâce à la suite de la description, qui s'appuie sur les figures suivantes :
- les figures la à 1c illustrent par des demi vues en coupe les phases de déploiement d'une membrane de cuisson à l'intérieur d'un moule selon l'état de la technique;
- la figure 2 est une vue en coupe schématique d'un moule de cuisson comprenant une membrane selon l'état de la technique ;
- la figure 3 est une vue en coupe schématique d'un moule de cuisson comprenant une membrane de cuisson selon l'invention ;
- la figure 4 est une vue à échelle agrandie du détail D de la figure 3 ;
- les figures 5a et 5b sont des vues en perspective illustrant des membranes de cuisson de l'invention ;
- les figures 6a à 6c illustrent de manière schématique des exemples de dimensionnement des membranes de l'invention pour différents pneumatiques.

Sur les différentes figures, les éléments identiques ou similaires portent la même référence. Leur description n'est donc pas systématiquement reprise.

Afin de mieux décrire l'invention, on a représenté en figures la à le les différentes phases de déploiement d'une membrane de cuisson 10' de l'état de la technique à l'intérieur d'un bandage 1 de pneumatique cru (ou ébauche de pneumatique) disposé dans un moule de cuisson 100. Le moule de cuisson 100 présente une forme générale de symétrie de révolution d'axe central 101 et le bandage 1 est centré sur ce dernier. Le moule de cuisson est disposé à l'intérieur d'une presse de cuisson qui fournit l'actionnement en fermeture/ouverture du moule et l'alimentation en fluide caloporteur.

Dans ce qui suit, une direction axiale désigne une direction parallèle à l'axe central 101 du moule, une direction radiale désigne une direction perpendiculaire à l'axe central, un plan radial désigne un plan contenant l'axe central et une direction radiale, et une direction circonférentielle désigne une direction perpendiculaire au plan radial.

Un bandage de pneumatique est obtenu par empilage de différentes nappes à base de caoutchouc et différents composants sur un tambour rotatif suivi d'une conformation en une forme toroïdale de l'ensemble. Les nappes appliquées sur le tambour pour obtenir un bandage de type radial sont dans l'ordre : une nappe de caoutchouc butyle qui forme la gomme interne étanche au gaz de gonflage, une nappe carcasse à base de fils de renforts noyés dans la gomme qui assure la tenue mécanique du pneumatique, suivie de l'agencement des tringles, éventuellement des profilés de bourrage tringles, ensuite des flancs, de la ceinture de renfort et de la bande de roulement. Une fois conformé en forme de tore, le bandage est placé à l'intérieur d'un moule de cuisson dont la cavité interne présente la forme et les dimensions du pneumatique fini.

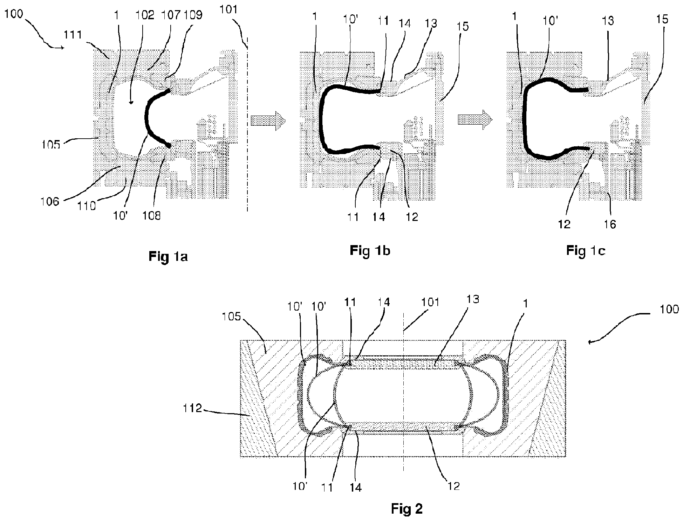

La figure la illustre le bandage disposé à l'intérieur du moule, ce dernier étant fermé et la membrane non déployée. La figure 1b illustre l'étape suivante lors de laquelle on commence à introduire le fluide caloporteur sous pression et la membrane commence à se déployer à l'intérieur du bandage, la cuisson n'ayant pas encore commencé. La figure le illustre la position complètement déployée de la membrane, le bandage étant poussé par la membrane et se trouve au contact de la surface interne du moule, position qui correspond à la phase de cuisson.

Plus particulièrement, le moule 100 comprend plusieurs secteurs 105 disposés côte-à-côte dans la direction circonférentielle. La surface interne des secteurs définit, avec celle des coquilles 106, 107 et des anneaux de moulage des bourrelets108, 109, une cavité interne 102 de réception du bandage au sein du moule. Le moule est ouvert, respectivement fermé, par déplacement axial d'au moins l'un des plateaux 110, 111 de la presse de cuisson et de déplacement radial des secteurs 105 du moule. Le moule de cuisson est du type connu et n'est pas décrit plus en détail.

La membrane 10' de cuisson comprend un corps de forme générale tubulaire qui est monté par ses extrémités longitudinales à un support au sein de la presse. La membrane 10' de cuisson comporte ainsi un corps 10'a pourvu de deux talons 11 qui sont ancrés sur deux plateaux de support de membrane 12 et 13 grâce à deux flasques 14. Une tige 15 montée à coulissement déplace un plateau de support de membrane par rapport à l'autre afin de permettre le déploiement et le repli de la membrane 10' et de pouvoir la séparer du pneumatique cuit. La membrane contient le fluide caloporteur qui est par exemple la vapeur ou un gaz neutre, tel l'azote. Le fluide caloporteur est introduit à l'intérieur de la membrane et extrait de celle-ci via un conduit 16. En fonctionnement, la membrane est déployée à l'intérieur du pneumatique et elle est repliée jusqu'à être contenue dans l'espace situé radialement à l'intérieur des bourrelets.

La figure 2 illustre de manière schématique, par une vue en coupe, un moule 100 comportant des secteurs 105, une couronne de frettage 112 pour déplacer radialement les secteurs et une membrane 10' de l'état de la technique. La membrane 10' est illustrée dans 3 positions : une première dans laquelle elle est repliée à l'intérieur des bourrelets, une position intermédiaire de déploiement à l'intérieur du bandage de pneumatique qui correspond au début d'injection de fluide caloporteur et une dernière dans laquelle elle plaque le pneumatique contre la surface interne du moule 100 et qui correspond à l'étape de cuisson.

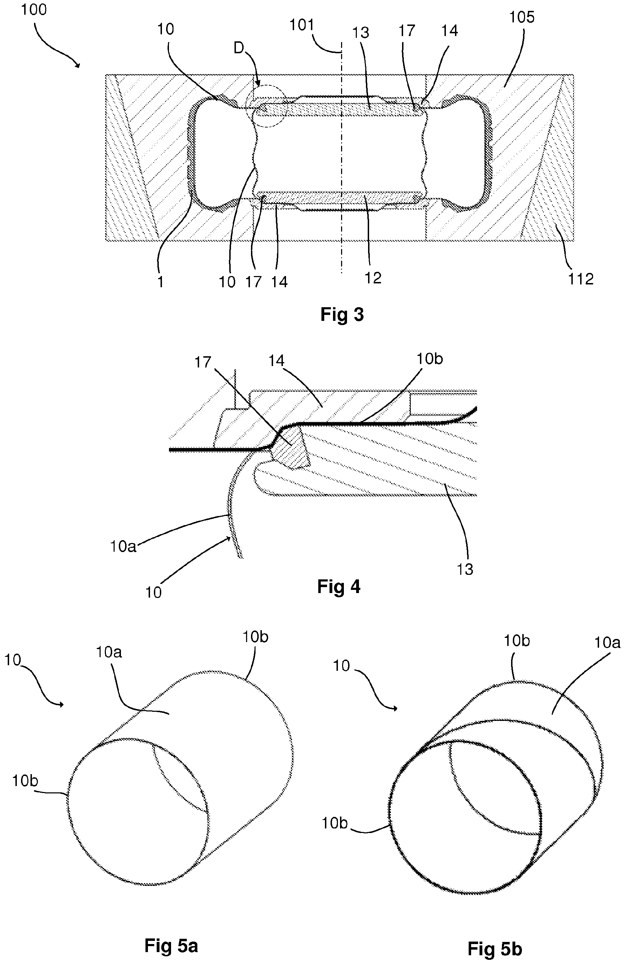

La figure 3 illustre le moule 100 de la figure 2 comportant une membrane 10 conformément à l'invention. La membrane 10 est illustrée dans deux positions de fonctionnement : une position repliée dans l'espace situé entre les bourrelets du bandage dans laquelle celui-ci peut être déplacé par rapport au moule et une position complétement expansée qui correspond à la position qu'elle prend lors de la cuisson du pneumatique. Selon l'invention, le corps 10a de la membrane 10 est réalisé à base d'un film en un polymère thermoplastique qui, en position repliée de la membrane, avant la cuisson, a une forme tubulaire de section circulaire.

Selon un aspect avantageux de l'invention, ledit film est choisi dans le groupe des films comportant au moins un polymère fluoré.

De préférence, ledit polymère comprend un copolymère éthylène-propylène fluoré (FEP). Un tel film a la propriété de tenir bien en température et présente de très bonnes propriétés anti-collantes (il est souvent utilisé pour la réticulation de composites). Il est très souple, en étant extensible avec une faible rigidité et a un comportement plastique, il a un coefficient de frottement très bas, il est non hygroscopique (absorption d'eau < 0,01%), il présente une température de fonctionnement allant jusqu'à +205°C qui est supérieure à la température de vulcanisation du bandage pneumatique.

A titre d'exemple un tel film est le Vacfilm^{®} 800G de la société CYTEC ou le A5000 de la même société.

D'autres films conviennent également dans le cadre de l'invention, par exemple les films fluorés FEP-PFA Teflon^{™} de la société Micel, ou les films de mise sous vide PO180, PO180 Tube, PA205 de la société Diatex.

Dans une variante avantageuse de l'invention, le film est texturé afin de permettre un meilleur drainage des gaz emprisonnés entre le bandage et la membrane lors de la cuisson. Un tel film est par exemple le film PA205 HF de la société Diatex.

Les tests effectués en laboratoire avec une membrane de l'invention réalisée à base de films fluorés tels le Tedlar^{®} (fluorure de polyvinyle) ou le Kynar^{®} (polyvinyle fluoride) de la société « Technifilm groupe addevmaterials » dans le cadre de l'invention ont donné de bons résultats.

Tel que visible aux figures 5a et 5b, le corps 10a de la membrane 10 est tubulaire de section circulaire entre ses extrémités longitudinales 10b. La membrane de la fig. 5a est obtenue par extrusion d'un tube en un polymère thermoplastique. La membrane de la fig. 5b est obtenue par découpage et soudure d'un film plan en un polymère thermoplastique et a également une forme de tube cylindrique de section transversale circulaire.

La membrane des figures 5a ou 5b est fixée aux plateaux membrane 12 et 13 à l'aide des flasques 14 et des cales 17. Les cales 17 sont, dans une variante, réalisées de manière similaire aux talons 11, c'est-à-dire qu'ils sont réalisés en caoutchouc et ont une forme annulaire et une section axiale en forme de coin ou inclinée. A la différence de la méthode de fixation illustrée à la figure 2, les cales 17 sont solidaires du plateau 12, respectivement 13, en étant fixées à demeure sur celui-ci de manière à prendre en sandwich, sur une longueur prédéterminée et contre la surface en vis-à-vis du flasque 14, l'extrémité longitudinale 10b de la membrane. La membrane 10 est ainsi fixée par ses extrémités 10b de manière étanche, aux plateaux 12, 13.

L'épaisseur du film qui constitue le corps de la membrane est inférieure à 0,1mm et elle est de préférence comprise entre 25 et 50µm. Le film est extensible dans plusieurs directions, dont au moins celle d'étirage du film plan ou du film tube et il a une capacité d'allongement d'au moins 300% dans chacune de ces directions. Par ailleurs, la conductivité thermique dudit film est supérieure à 0,1W/m/K. Un tel film permet de réduire sensiblement la durée de cuisson du pneumatique et de résister aux températures de cuisson, comprises entre 120 et 180°C et à la pression exercée par le fluide caloporteur, pression comprise 10 et 30 bars.

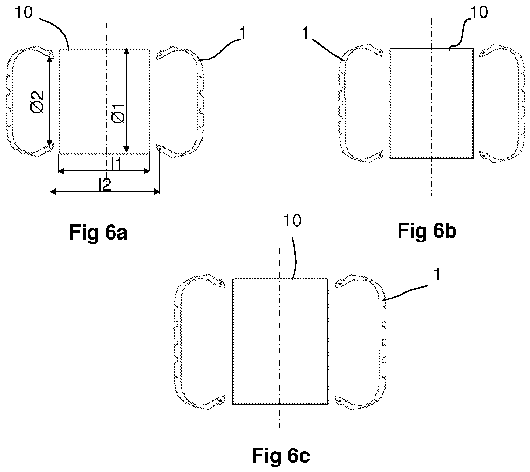

Les dimensions de la membrane 10 sont choisies en relation avec les dimensions du pneumatique à cuire. Les figures 6a à 6b illustrent quelques exemples de dimensionnement d'une membrane 10 de l'invention. On a désigné sur les figures par Ø1 le diamètre externe de la membrane, par Ø2 le diamètre du « seat », ce qui correspond au diamètre au niveau des bourrelets, par l1 la longueur de la membrane et par l2 « l'entre-tringle » ou la distance entre les bourrelets du pneumatique.

Ainsi, la membrane de la figure 6a a un diamètre Ø1 légèrement inférieur à Ø2 pour une longueur l1 proche de l2. A titre d'exemple, pour un pneumatique 225/55/16, la membrane a un diamètre de 400mm et une longueur de 250mm. Il en est de même pour la membrane de la figure 6b qui s'applique à un pneumatique 305/55/16, et elle a un diamètre de 400mm et une longueur de 350mm.

La membrane de la figure 6c a un diamètre Ø1 bien inférieur à Ø2 pour une longueur l1 supérieure à l2. A titre d'exemple, pour un pneumatique 225/55/18, la membrane a un diamètre de 450mm et une longueur de 350mm.

Ainsi, de par la grande capacité de déformation du film qui la constitue, une membrane de l'invention de dimensions données peut être utilisée avec une plus grande variété de dimensions de pneumatique. De ce fait, le nombre de références de membranes est bien plus restreint comparé avec celui des membranes en caoutchouc butyle de l'état de la technique.

En fonctionnement, on agence une membrane 10 de l'invention sur une presse de cuisson, à l'intérieur du, et de manière à coopérer avec, un moule de cuisson 100 en étant centrée sur l'axe 101 de celui-ci. On introduit un bandage de pneumatique 1 à l'intérieur du moule et on ferme le moule. On injecte le fluide caloporteur sous pression dans la membrane 10 qui se déforme et plaque le bandage contre la surface interne du moule. La cuisson du pneumatique s'en suit sur une durée de cuisson nettement plus courte que celle effectuée en utilisant une membrane en butyle de l'état de la technique. On ouvre le moule100 et on en extrait le pneumatique cuit. La membrane 10 de l'invention reste en place pour la cuisson suivante qui reprend le même cycle.

D'autres variantes et modes de réalisation de l'invention peuvent être envisagés sans sortir du cadre de ses revendications.

Ainsi, on peut utiliser un autre moyen de fixation des extrémités longitudinales de la membrane aux plateaux de support de la presse, notamment en utilisant des moyens de fixation rapide, par exemple au moyen d'anneaux à fixation directe sur les plateaux pour emprisonner chacun l'une des extrémités de la membrane.

On peut également envisager l'utilisation d'un film comprenant au moins deux couches, dont l'une (celle qui est destinée au contact avec le bandage de pneumatique) a des propriétés anti-collantes.

## Revendications

1. Membrane (10) de cuisson pour pneumatique comprenant un corps (10a) en une matière souple adapté pour être inséré en position repliée à l'intérieur d'un bandage de pneumatique (1) dans un moule de cuisson (100) et qui est apte à être expansé de manière à plaquer le bandage contre la surface interne du moule, ledit corps (10a) ayant une forme de tube cylindrique lorsque la membrane est en position repliée, la membrane étant **caractérisée en ce que** ledit corps (10a) est réalisé à base d'un film en un polymère thermoplastique.

2. Membrane selon la revendication 1, **caractérisée en ce que** ledit film en un polymère thermoplastique est du type anti-collant.

3. Membrane selon l'une des revendications 1 ou 2, **caractérisée en ce que** ledit film est choisi dans le groupe des films comportant au moins un polymère fluoré.

4. Membrane selon la revendication 3, **caractérisée en ce que** le polymère fluoré est choisi dans le groupe des polymères comportant un copolymère éthylène-propylène fluoré (FEP), un perfluoroalkoxy (PFA), un copolymère éthylène-tétrafluoroéthylène, (ETFE), ou un polytétrafluoroéthylène (PTFE) et leurs mélanges.

5. Membrane selon l'une des revendications précédentes, **caractérisée en ce que** l'épaisseur dudit film est inférieure à 0,1mm.

6. Membrane selon l'une des revendications précédentes, **caractérisée en ce que** l'épaisseur dudit film est comprise entre 25 et 50µm.

7. Membrane selon l'une des revendications précédentes, **caractérisée en ce que** ledit film est extensible dans plusieurs directions et il a une capacité d'allongement d'au moins 300% dans chaque direction.

8. Membrane selon l'une des revendications précédentes, **caractérisée en ce que** la conductivité thermique dudit film est supérieure à 0,1W/m/K.

9. Membrane selon l'une des revendications précédentes, **caractérisée en ce que** ses dimensions sont choisies en fonction de celles du bandage de pneumatique à cuire de manière à ce que le diamètre dudit corps (10a) soit inférieur au diamètre interne du bandage de pneumatique et la longueur au moins égale à la distance comprise entre ses tringles.

10. Dispositif de vulcanisation de pneumatique à l'aide d'un moule de cuisson (100) et d'un fluide caloporteur qui agit à travers une membrane de cuisson pour plaquer un bandage de pneumatique (1) contre la surface interne du moule, **caractérisé en ce qu'**il comprend une membrane (10) selon l'une des revendications précédentes.

11. Procédé de fabrication de pneumatique, comportant les étapes suivantes :
- on confectionne un bandage de pneumatique (1) par assemblage sur un tambour rotatif d'au moins : une couche de gomme intérieure étanche au gaz, une nappe carcasse, une nappe de renfort et une bande de roulement et par conformation en forme de tore ;
- on place le bandage de pneumatique (1) dans un moule de cuisson (100) ;
- on réalise la cuisson du pneumatique à l'aide d'un fluide caloporteur introduit à l'intérieur du moule de cuisson pour plaquer ledit bandage contre la surface interne du moule en agissant sur la face interne d'une membrane (10) expansible réalisée à base d'un film en un polymère thermoplastique et comportant un corps (10a) qui a une forme de tube cylindrique lorsque la membrane est en position repliée, avant la cuisson.

## Patentansprüche

1. Heizbalg (10) für Reifen, der einen Körper (10a) aus einem flexiblen Material umfasst, der so ausgelegt ist, dass er in einer zusammengelegten Position in eine Reifenbandage (1) in einem Vulkanisierformwerkzeug (100) eingesetzt wird und der dazu in der Lage ist, derart gedehnt zu werden, dass er die Bandage gegen die Innenfläche des Formwerkzeugs presst, wobei der Körper (10a) die Form einer zylindrischen Röhre aufweist, wenn sich der Balg in der zusammengelegten Position befindet, wobei der Balg **dadurch gekennzeichnet ist, dass** der Körper (10a) auf Basis einer Folie aus einem thermoplastischen Polymer gefertigt ist.

2. Balg nach Anspruch 1, **dadurch gekennzeichnet, dass** die Folie aus einem thermoplastischen Polymer eine Antihaftfolie ist.

3. Balg nach Anspruch 1 oder 2, **dadurch gekennzeichnet, dass** die Folie aus der Gruppe von Folien ausgewählt ist, die mindestens ein Fluorpolymer umfasst.

4. Balg nach Anspruch 3, **dadurch gekennzeichnet, dass** das Fluorpolymer aus der Gruppe von Polymeren ausgewählt ist, die ein fluoriertes Ethylen-Propylen-Copolymer (FEP), ein Perfluoralkoxy (PFA), ein Ethylen-Tetrafluorethylen-Copolymer (ETFE) oder ein Polytetrafluorethylen (PTFE) und ihre Mischungen umfasst.

5. Balg nach einem der vorhergehenden Ansprüche, **dadurch gekennzeichnet, dass** die Stärke der Folie unter 0,1 mm liegt.

6. Balg nach einem der vorhergehenden Ansprüche, **dadurch gekennzeichnet, dass** die Stärke der Folie zwischen 25 und 50 µm liegt.

7. Balg nach einem der vorhergehenden Ansprüche, **dadurch gekennzeichnet, dass** die Folie in mehreren Richtungen streckbar ist und ein Dehnvermögen von mindestens 300% in jeder Richtung aufweist.

8. Balg nach einem der vorhergehenden Ansprüche, **dadurch gekennzeichnet, dass** die Wärmeleitfähigkeit der Folie über 0,1 W/m/K liegt.

9. Balg nach einem der vorhergehenden Ansprüche, **dadurch gekennzeichnet, dass** seine Abmessungen nach denen der zu vulkanisierenden Reifenbandage gewählt sind, sodass der Durchmesser des Körpers (10a) geringer ist als der Innendurchmesser der Reifenbandage und die Länge mindestens dem Abstand zwischen den Kernen entspricht.

10. Vorrichtung zur Vulkanisierung von Reifen mithilfe eines Vulkanisierformwerkzeugs (100) und eines Wärmeträgerfluids, das durch einen Heizbalg einwirkt und so eine Reifenbandage (1) gegen die Innenfläche des Formwerkzeugs presst, **dadurch gekennzeichnet, dass** sie einen Balg (10) nach einem der vorhergehenden Ansprüche umfasst.

11. Verfahren zur Reifenherstellung, das folgende Schritte umfasst:
- Konfektionieren einer Reifenbandage (1), indem auf einer Drehtrommel mindestens eine gasdichte Innengummischicht, eine Karkassenlage, eine Verstärkungslage und eine Lauffläche zusammengebracht und in Form eines Torus gebracht werden;
- Legen der Reifenbandage (1) in ein Vulkanisierformwerkzeug (100);
- Vornehmen der Vulkanisation des Reifens mithilfe eines Wärmeträgerfluids, das ins Innere des Vulkanisierformwerkzeugs geleitet wird, damit die Bandage gegen die Innenfläche des Formwerkzeugs gepresst wird, indem es auf die Innenfläche eines dehnbaren Balgs (10) auf Basis einer Folie aus einem thermoplastischen Polymer einwirkt, der einen Körper (10a) aufweist, der die Form einer zylindrischen Röhre aufweist, wenn sich der Balg vor der Vulkanisation in der zusammengelegten Position befindet.

## Claims

1. Curing bladder (10) for a tyre comprising a body (10a) made of a flexible material suited to being inserted in the drawn-in position inside a pneumatic tyre (1) in a curing mould (100) and which is capable of being expanded so as to press the tyre against the internal surface of the mould, the said body (10a) having a cylindrical tube shape when the bladder is in the drawn-in position, the bladder being **characterized in that** the said body (10a) is based on a film made of a thermoplastic polymer.

2. Bladder according to Claim 1, **characterized in that** the said film made of a thermoplastic polymer is of the non-stick type.

3. Bladder according to either of Claims 1 and 2, **characterized in that** the said film is chosen from the group of the films comprising at least one fluoropolymer.

4. Bladder according to Claim 3, **characterized in that** the fluoropolymer is selected from the group of the polymers consisting of a fluorinated ethylene/propylene copolymer (FEP), a perfluoroalkoxy (PFA), an ethylene/tetrafluoroethylene copolymer (ETFE), or a polytetrafluoroethylene (PTFE) and their mixtures.

5. Bladder according to one of the preceding claims, **characterized in that** the thickness of the said film is less than 0.1 mm.

6. Bladder according to one of the preceding claims, **characterized in that** the thickness of the said film is between 25 and 50 µm.

7. Bladder according to one of the preceding claims, **characterized in that** the said film is extendable in several directions and it has an elongation capacity of at least 300% in each direction.

8. Bladder according to one of the preceding claims, **characterized in that** the thermal conductivity of the said film is greater than 0.1 W/m/K.

9. Bladder according to one of the preceding claims, **characterized in that** its dimensions are chosen as a function of those of the pneumatic tyre to be cured, so that the diameter of the said body (10a) is less than the internal diameter of the pneumatic tyre and the length at least equal to the distance between its bead wires.

10. Device for vulcanization of a tyre using a curing mould (100) and a heat-exchange fluid which acts through a curing bladder in order to press a pneumatic tyre (1) against the internal surface of the mould, **characterized in that** it comprises a bladder (10) according to one of the preceding claims.

11. Tyre manufacturing process, comprising the following steps:
- a pneumatic tyre (1) is prepared by assembling, on a rotating drum, at least: a gastight inner rubber layer, a carcass ply, a reinforcing ply and a tread and by shaping into the shape of a torus;
- the pneumatic tyre (1) is placed in a curing mould (100);
- the tyre is cured using a heat-exchange fluid introduced inside the curing mould in order to press the said tyre against the internal surface of the mould by acting on the internal face of an expandable bladder (10) produced based on a film made of a thermoplastic polymer and comprising a body (10a) which has a cylindrical tube shape when the bladder is in the drawn-in position, before the curing.
